# EUROPEAN PATENT APPLICATION

(11) **EP 1 873 441 A1**
(43) Date of publication of application: **02.01.2008**
(21) Application number: 06300733.0
(22) Date of filing: 29.06.2006
(51) Int. Cl.: F16M 11/00

(54) **A display device comprising a flat screen and a stand**

(71) Applicant: TTE Europe SAS, 92641 Boulogne (FR); Thomson Licensing, 92100 Boulogne-Billancourt (FR)
(72) Inventor: Policar, Jean-Michel, 92648 Boulogne Cedex (FR); Porte, Pierre, 92648 Boulogne Cedex (FR); Faria Oliveira, Joaquim, 92648 Boulogne Cedex (FR)

(57) **Abstract**

The invention is related to a display device comprising a flat screen and a stand comprising at least one movable arm (3) pivoted around an axis, which is roughly parallel to the screen, into a first position or a second position. To enable the move of the arm and good stability of the display device, the pivot is arranged within a middle third of the length of the arm (3).

## Description

### 1. Field of the invention

The present invention is related to a display device comprising a flat screen according to the preamble of claim 1. Such display devices are used for TV's or computers and comprise a LCD screen and a housing. They are mounted either in a standing position on a horizontal plane or in a hanging position e.g. on a wall.

### 2. Description of the prior art

Display devices known in the art are equipped e.g. with a stand which is integrated into, or firmly fixed at, the housing of the device. Such a stand is published in the US 2002053629 A1. It consists of numerous parts and is accordingly costly.

In the FR application No. 0552651, which is not a prior publication, a stand is described which is attached to a display device. This stand consists of at least one arm, which is pivoted around a vertical axis into a first and a second position. In the first position, a second end of the arm is straddled from the front plane of the device to keep it in an upright position while standing on a horizontal plane. In the second position the arm rests in a space which is either under or above and parallel to the display. In an embodiment, a speaker is mounted on the second end of the arm. The pivot is situated at a first end of the arm. As a result the arm can be turned only to only one side of the plane of the display, preferably the backside. In order to achieve a stable stand in the first position, the device must be positioned in a slightly to the second end of the arm.

### 3. Summary of the invention

It is therefore desirable to improve a stand of a display device comprising a flat screen and a stand comprising at least one movable arm pivoting around an axis, which is roughly parallel to the screen (i.e. the angle between the axis and the screen is equal or lower than 20° and preferably equal or lower than 10°), into a first position or a second position. For the sake of easy handling and increased stability when standing on a plane support, it is desirable to provide a system for stabilizing a free standing display device. On the one hand this ensures a greater stability (especially against tilting) and on the other hand a simple handling when altering the system to bring the device into a hanging position.

According to the invention, the pivot is arranged within a middle third of the length of the arm.

Here the axis is defined with respect to the device being in an upright position: when the screen of the device is vertical the axis is roughly vertical too and in a right angle to a bottom of the device.

Arranging the pivot within the middle third of the length of the arm enables both ends of the arm to move around the pivot at approximately equal lengths. As a result the arm extends to the front and to the back of the device when the arms are in a first position, where at least the majority of the arm is not parallel to a front plane.

According to another aspect of the invention, the arm(s) is (are) pivoting around the axis and translating, when it (they) moves (move) from the first position to the second position. A guide for the pivot, this guide being in the arm or arms is advantageously enabling the combination of rotation and translation move.

As a result (of the position of the pivot in the middle third of the length of the arm and/or combined movement of rotation and translation of the arm), the device is supported against tilting to the back as well as to the front, and the standing position of the device on a horizontal plane is very stable.

On the other hand the arm can easily moved into a second position where at least an essential part of the arm is almost parallel to the length of the screen, and thus does not significantly extend the display device. As a result the device can be hung at a wall or a ceiling, using a respective standard support fixed to the back, and the arm is not a disturbance. Furthermore the arm in the second position saves space for packing and transport.

According to a specific feature, two arms are arranged, each arm having its own pivot in relation to the device, results in an improved stability of the device while standing.

According to another feature, the arms are hinged at their inner first ends. Hinging the arms at their inner first ends easies their handling and assures stability.

According to an advantageous feature, the arms are symmetrical and then less costly to manufacture. The hinge may be unsymmetrical.

According to a specific feature, each arm is fixed to a bottom of the device by a screw that constitutes the pivot by penetrating a first hole in the arm. Then, the fixing of the arm(s) to the device during fabrication is very easy. If desired the arms can be detached, without special knowledge, by unscrewing the screws.

In a further embodiment the hole is oblong. This simplifies the construction regarding the kinetics and eases handling by the user.

Advantageously, composing the hinge by a pin on a first end of one of the arms, and a correspondent second hole in the first end of the other arm, results in a simple construction of the hinge. The first ends are defined to adjacent ends when mounted on the device.

In another embodiment the second hole has an oblong, arc-shaped form, which results in kinetic advantages.

According to a specific feature, the first ends are latched when the arms are in the first position. This secures the arms at rest in that desired position. An unintended displacement of the arms, resulting in an unstable standing of the device, is thus avoided.

In an advantageous embodiment, each arm each arm starting in a longitudinal direction from the first end has an arc-shaped form followed by a rectilinear form. As a result when the arm is in the first position, it does not extent out too far from the front of the device but rather provides stability to the standing position.

According to a specific embodiment, at least one arm supports at least one loudspeaker Then, the latter does not need to be integrated into the device. It is therefore easy to attach various types of loudspeakers.

In another preferred embodiment the total length of each arm is equal to or greater than half the length of the display device. Thus a positive appearance of the device is achieved.

Metal as material for the arm is stiff enough to provide a sufficient stability even if the arm is thin. Light metals such as aluminium are preferred.

According to an advantageous embodiment, each arm, when in the second position, is sunk into the bottom of the device.

According to another aspect of the invention, a display device comprises a flat screen and a stand comprising at least one movable arm rotating around an axis and translating into a first position or a second position. Advantageously, the pivot is roughly parallel to the screen (i.e. the angle between the axis and the screen is equal or lower than 20° and preferably equal or lower than 10°). According to this aspect of the invention, the pivot can be arranged within a middle third of the length of the arm or in another part of the arm.

### 4. Brief description of the drawings

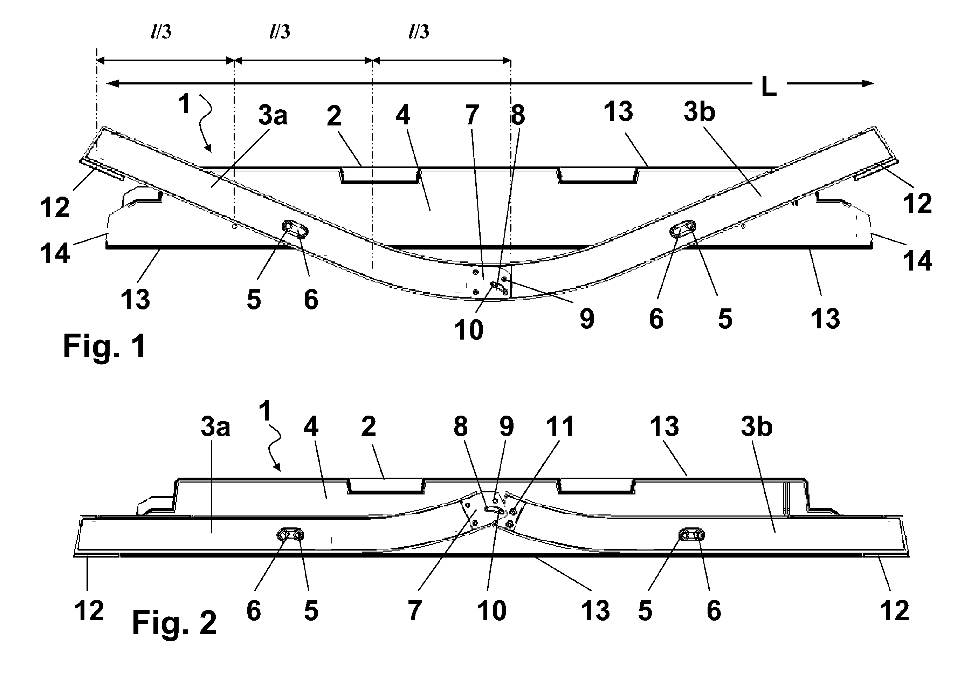

The invention will be explained in more detail using one embodiment, illustrated in figures 1 and 2.

It shows:
- figure 1, a simplified view of the downside of the embodiment of the invention with two arms being in a first position;
- figure 2, a simplified view of the downside of the embodiment of the invention with the arms being in a second position;
- figure 3, a section of a first hole with a screw as a detail; and
- figure 4, a section of a hinge of two arms as a detail.

### 5. Detailed description of a preferred embodiment of the invention

According to an embodiment of the invention as presented in figures 1 and 2, a display device 1 comprises a flat screen, e.g. a LCD screen, which is inserted in a housing 2. Such a flat screen is well known in the art.

In the following description the terms front and rear refer to the sides of the device 1, whereby front represents the side of the screen and rear represents the opposite side. Left and right are defined as if looking at the front.

The device 1 is equipped with a system for stabilization while free standing on a plane. The system comprises two arms 3a and 3b that are attached outside to the bottom 4 of the housing 2 and are able to be pivoted. Each of the arms 3a, 3b has its own pivot. Each pivot is situated within a different outer end region of the bottom 4, where the outer end region is approximately a quarter of the length L of the bottom 4.

Each pivot is constituted by a screw 5 which is screwed into the bottom 4, thus fixing the arms 3a, 3b to the bottom 4. When the screws 5 are rigidly screwed the arms 3a, 3b are fixed in their position, whereas released screws 5 allow the arms 3a, 3b to pivot and translate from a first position to a second position or vice versa.

As a variant of the invention, the screw 5 can be replaced by any other fixing means having an axis which can be used as a pivot. According to another variant of the invention, the pivot comprises a tube around the screw 5 or fixing means, the tube facilitating the rotation of the arms (the screw or other fixing means being then on the axis of the pivot); advantageously, the length of the tube would be lower than or equal to the thickness of the arm; its inner diameter is advantageously equal of greater than the outer diameter of the screw of fixing means.

The first position is when the arms 3a, 3b extend the front and the rear of the device to ensure a stable stand on a plane. The second position is when the arms 3a, 3b are within the depth of the device, meaning they do not extend the front and the rear.

Each arm 3a, 3b is made out of one piece of an oblong strip of material, preferably a metal such as aluminium, with a flat rectangular cross section. Starting in a longitudinal direction from a first end, which is roughly in the middle of the length L of the bottom 4 when assembled, each arm 3a, 3b is composed of an arc- shaped part followed by a rectilinear part. Each arm 3a, 3b has the length of more than half the length L of the bottom 4, so that a second end of each arm 3a, 3b opposite the first end, extends the bottom 4 to a certain degree. Each first end is formed like a tongue that extends at a shorter height, forming a step to both main areas of the arm 3a, 3b.

In each of the arms 3a, 3b an oblong first hole 6 is arranged at a distance from the second end which corresponds to the distance from the end of the bottom 4 to the pivot plus the extension of the second end. More generally, according to one aspect of the invention, the centre of the hole 6 is arranged to be within a middle third of the length, I, of the arm. A longitudinal axis of the first hole 6 is parallel to the longitudinal axis of the rectilinear part of the arm 3a, 3b. The width of the first hole 6 is equal to the outer diameter of a thread part of the screw 5 (or of fixing means or tube according to variants of the invention) around plus a very small clearance. The width of the first hole 6 is, for example, equal to 8mm (and preferably between 5 and 15 mm); its length is, for example, equal to 25 mm (and preferably between 10 and 50 mm); the arms 3a and 3b translate along a length equal to 17mm (and, more generally and preferably, between 10 and 50 mm) when the arms are moving from the first to the second position or vice versa.

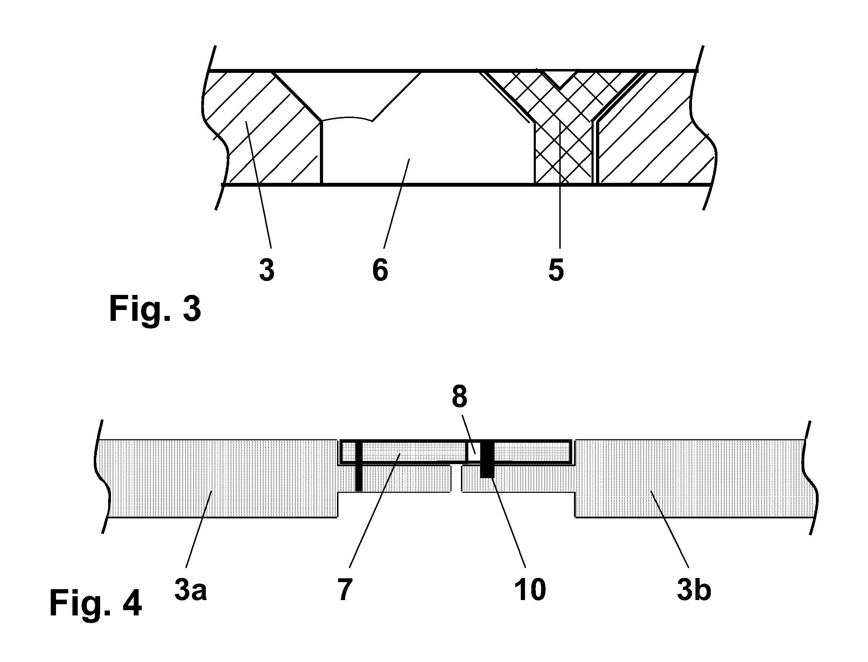

As shown in figure 3, the ends of the first hole 6 are rounded and prepared to fit and to hide a countersunk head of the screw 5. For the latter the edges of the ends opposite the bottom 4 are conically enlarged so that the screw head is tangent to the arm or inside the hole (the arm can then lie on a floor without disturbance due to the screw).

As shown in figure 4, the first ends of the arms 3 are equipped differently to form a hinge:

On the first end of the left arm 3a a bracket 7 is rigidly fixed, e.g. by screws or by rivets. The bracket 7 is defined as part of the arm 3a. The bracket 7 is as wide as the arm 3a, twice as long as the tongue, and as high as the step formed by the tongue. So the outer surface of the left arm 3a including the bracket 7 is even. In the bracket 7 an oblong arc-shaped second hole 8 and a circular third hole 9 are arranged. The second hole 8 extends roughly from a front corner to a centre line, whereby an average angle is about 45°. The third hole 9 may be a blind hole starting from the side facing the bottom 4. A rear corner of the bracket 7 is rounded in order to save space when the arms 3a, 3b are in a second position. Depending on the position of the arms 3a, 3b the bracket 7 overlaps more or less the first end of the right arm 3b.

The first end of the right arm 3b bears a pin 10 that stands at a right angle on the first end and protrudes the second hole 8 to form a hinge. A nose 11 on the first end of the right arm 3b corresponds to the third hole 9, when the arms 3a, 3b are in the first position.

The bottom 4 of the housing 2 is formed as a plane, which is surrounded by a flat wall 13 except for a free part 14 at the left and the right side. As a result when the arms 3a, 3b are in the second position, they have contact with the plane of the bottom 4 and are mostly hidden behind the wall 13, while the second ends extend to the left and to the right.

When the arms 3a, 3b are in the first position they are supported by the wall 13. For ensuring this position the first ends are latched by the nose 11 resting in the third hole 9. In an alternative embodiment the first position is secured by at least one second screw, which is screwed into the bracket 7 and the first end of the right arm 3b.

On the second end of each arm 3a, 3b a loudspeaker 12 is fixed to extend close to and along side the housing 2.

When the arms 3a, 3b are in the second position the device 1 including the arms 3a, 3b, is ready to be transported or to be brought into a hanging position. In the second position the arms 3a, 3b extend neither the front nor the rear of the device 1. Thus the packing volume of the device is considerably reduced, saving packing and transporting costs. When the device is hanging the arms 3a, 3b do not cause a disturbance since they do not extend to the front and to the rear.

When the arms 3a, 3b are in the first position the device 1 is ready to stand upright on a plane.

The position is easily changed by loosening the screws 5, and moving the arms 3a, 3b into the desired first or second position. The arms must be positioned either on the wall 13 or on the plane of the bottom 4. The screws 5 are then refastened.

The invention is not limited to the above described embodiments and covers many other variant.

In another embodiment which is not illustrated in the drawings, the system for stabilization comprises only one arm 3. The arm 3 is attached to the bottom 4 of the device 1 by a screw 5 and able to be pivoted. The pivot is situated in the centre of the bottom 4 and in the centre of the arm 3. According to variants, the pivot is situated on left or right of the bottom 4, while being arranged within a middle third of the length of the arm. The bottom 4 is formed as a plane. The front of the bottom is provided with a wall except a clearance in the centre. The width of this clearance is equal to the width of the arm 3. For a standing position of the device 1 the arm 3 is pivoted to be in a right angle to the longitudinal axis of the bottom 4 and to lock in the clearance. For a hanging position and/or for transport the arm 3 is parallel to the longitudinal axis of the bottom 4 and hidden behind the wall.

According to other embodiments of the invention, the pivot is not necessarily in the center of the arm and is arranged within a middle third of the length of the arm. This enables a big stability of the device system.

According to some embodiments of the invention, the arm(s) is (are) not fitted with loudspeakers. Then, advantageously, the total length of the arms is equal to or lower than the width of the screen.

According to some embodiments of the invention, the movable arm(s) is (are) removable, e.g. with screws or other means that can be unscrewed or removed by a user, to change the position of the arm(s). According to other embodiments of the invention, arm(s) is (are) fixed in one of position among display device standing position or display device hanging position through soft or strong blocking means. For example, in some embodiments, the screen and/or the arms comprises elastic parts and/or clips (soft blocking means) to maintain the arms in other of the two positions. These parts can be implemented near the hole associated to the pivot and/or in association with the hinge. Advantageously, according to other embodiments of the invention, the arms are blocked firmly in one of the two positions by screws or other fixing means (strong blocking means). This enables a bigger stability in one position and improve safety. Using a strong blocking means, to change the position, according to some embodiments, the blocking means are loosened to enable the change of position and then tighten to block the arm(s) in the desired position; according to other embodiments, the blocking means (e.g. screws) are removed to enable the change of position and reinstalled after positioning of the arms in the desired position.

According to some embodiments of the invention, the stand comprise two arms (a support part that enabling to the display device to stand when the arm are in the standing position) and a hinge. Advantageously, the arms themselves are symmetrical. According to other embodiments of the invention, the stand comprises only arms (as support part) and does not comprise any hinge. In this case, the mechanical link between the arms and the screen can be improved by other means (e.g. others screws, and/or guides).

According to a variant of the invention, the arms (or the arm) comprise a pivot (e.g. a pin) that replaces the hole in the arm and the pivot associated to the screen, ,

As mentioned above, the invention is related mainly to two aspects, which can be combined with the different variants mentioned above: according to a first aspect, the pivot is advantageously in the middle of the length of the arm; according to a second aspect, the pivot and guiding means enable a rotation and translation of the arm(s). According to some embodiments of the invention associated to the combined movement of translation and rotation, the pivot of the arm(s) is not necessarily at the middle third of the length of the arm and can be closer to an end of the arm.

## Claims

1. A display device comprising a flat screen and a stand comprising at least one movable arm (3) pivoted around an axis, which is roughly parallel to the screen, into a first position or a second position,
**characterized in that** the pivot is arranged within a middle third of the length of the arm (3).

2. A display device, **characterized in that** the at least one movable arm is pivoting around the axis and translating, when it moves from the first position to the second position.

3. The display device according to one of the claims 1 and 2, **characterized in that** each arm comprises a first hole (6), which is an oblong hole, the pivot penetrating the first hole.

4. The display device according to one of the claims 1 to 3, **characterized in that** each arm (3) is fixed to a bottom of the device (1) by a screw (5) that constitutes the axis of the pivot.

5. The display device according to one of the claims 1 to 4, **characterized in that** two arms (3a, 3b) are arranged, each arm (3a, 3b) having its own pivot in relation to the device (1).

6. The display device according to claim 5, **characterized in that** the arms (3a, 3b) are hinged at their inner first ends.

7. The display device according to claim 5 or 6, **characterized in that** the arms (3a, 3b)) are symmetrical.

8. The display device according to one of the claims 6 and 7, **characterized in that** the hinge is composed by a pin (11) arranged on the first end of one of the arms (3b), and a corresponding second hole (8) in the first end of the other arm (3a).

9. The display device according to claim 8, **characterized in that** the second hole (8) has an oblong arc-shaped form.

10. The display device according to claim 8 or 9, **characterized in that** the first ends are latched when the arms (3a, 3b) are in the first position.

11. The display device according to one of the claims 1 to 10, **characterized in that** each arm (3) starting in a longitudinal direction from the first end has an arc-shaped form followed by a rectilinear form.

12. The display device according to one of the claims 1 to 11, **characterized in that** at least one arm (3) supports at least one loudspeaker (13).

13. The display device according to one of the claims 1 to 12, **characterized in that** the total length of each arm (3) is equal to or greater than half the length (L) of the display device (1).

14. The display device according to one of the claims 1 to 13, **characterized in that** each arm (3) is made out of metal.

15. The display device according to one of the claims 1 to 14, **characterized in that** each arm (3), when in the second position, is sunk into the bottom of the device (1).
